Europäisches Patentamt

European Patent Office

Office européen des brevets

(11) Veröffentlichungsnummer: **0 332 762**
**A1**

## (12) EUROPÄISCHE PATENTANMELDUNG

(21) Anmeldenummer: **88121726.9**

(22) Anmeldetag: **27.12.88**

(51) Int. Cl.⁴: **A47B 81/06 , A47B 37/02**

(30) Priorität: **15.03.88 DE 8803519 U**

(43) Veröffentlichungstag der Anmeldung:
**20.09.89 Patentblatt 89/38**

(84) Benannte Vertragsstaaten:
**AT BE CH DE ES FR GB GR IT LI LU NL SE**

(71) Anmelder: **Nixdorf Computer**
**Aktiengesellschaft**
**Fürstenallee 7**
**D-4790 Paderborn(DE)**

(72) Erfinder: **Kindermann, Heinz**
**Sundern 57**
**D-4796 Salzkotten(DE)**
Erfinder: **Lüke, Wilfried**
**Bokelfenner Strasse 86**
**D-4815 Schloss Holte-Stukenbrock(DE)**
Erfinder: **Berens, Petra**
**Sennestrasse 128**
**D-4794 Hövelhof(DE)**

(74) Vertreter: **Schaumburg, Thoenes &**
**Englaender**
**Mauerkircherstrasse 31 Postfach 86 07 48**
**D-8000 München 80(DE)**

(54) **Untersatz für ein Gerät.**

(57) Die Erfindung betrifft einen Untersatz für ein Gerät, beispielsweise einen Bildschirm (40) für eine Datenverarbeitungsanlage. Der Untersatz besteht aus einer Lagerplatte (2), an der mehrere Haltearme (14 bis 20) parallel zur Lagerplattenebene verstellbar gelagert sind, so daß sie an die Abmessungen des Gerätes (40) angepaßt werden können. Die Lagerarme sind zu einem Teil (Lagerarm 14, 16) paarweise parallel zueinander verschiebbar, zu einem anderen Teil (Lagerarme 18, 20) verschiebbar und verschwenkbar. Die Lagerplatte (2) besteht vorzugsweise aus einer Unterplatte (4) und einer Oberplatte (6), zwischen denen die Lagerarme (14 bis 20) geführt sind. Die Lagerarme (14 bis 20) haben an ihren freien Enden Halteköpfe mit Einrichtungen für die Halterung des Gerätes (40).

Fig.1

## Untersatz für ein Gerät

Die Erfindung betrifft einen Untersatz für ein Gerät.

In vielen Fällen werden Geräte nicht einfach auf einen Arbeitstisch gestellt, sondern auf einen schwenkbaren oder neigbaren Untersatz. Bekannt sind verstellbare Untersätze zur Aufnahme eines Telefons, eines Bildschirmes oder dergleichen. Dabei ist es erwünscht, daß der Untersatz an die Abmessungen des Gerätes, welches er aufnehmen soll, angepaßt ist, so daß beispielsweise große Geräte auf ihrer ganzen Auflagefläche unterstützt werden, daß andererseits bei kleinen Geräten der Untersatz nicht über den Grundriß des Gerätes übersteht.

Da Geräte der oben genannten Art, nämlich beispielsweise Telefone oder Bildschirme, in ganz unterschiedlichen Grössen zur Verfügung stehen, müssen in einem modernen Bürobetrieb im allgemeinen Untersätze unterschiedlicher Grössen vorrätig gehalten werden.

Es ist die Aufgabe der vorliegenden Erfindung, einen Untersatz zu schaffen, welcher für Geräte unterschiedlicher Grösse verwendbar ist, ohne daß er die Geräte nur auf einem Teil ihrer Auflagefläche unterstützt oder über dem Grundriß der Geräte übersteht.

Diese Aufgabe ist erfindungsgemäß durch eine Lagerplatte gelöst, an der mehrere Haltearme parallel zur Lagerplattenebene verstellbar gelagert sind.

Eine Minimalanforderung ist dann erfüllt, wenn zwei Haltearme vorgesehen sind, die zusammen mit der Lagerplatte drei Unterstützungspunkte für das Gerät ergeben und damit eine stabile Aufstellung des Gerätes ermöglichen.

Um den Untersatz möglichst variabel zu gestalten, ist in einer Ausgestaltung der Erfindung vorgesehen, daß die Haltearme parallel zur Lagerplattenebene verschiebbar und/oder jeweils um eine senkrecht zur Lagerplattenebene stehende Achse verschwenkbar sind. Damit lassen sich die Haltearme an unterschiedliche Grundrißformen und -größen des Gerätes beliebig anpassen.

In einer weiteren Ausgestaltung der Erfindung ist vorgesehen, daß wenigstens zwei Haltearme parallel zueinander verschiebbar gelagert sind und daß diese Haltearme an einander zugekehrten Seiten jeweils ein Zahnstangenprofil haben, welches jeweils mit einem zwischen den Haltearmen an der Lagerplatte angeordneten Zahnritzel in Eingriff steht, so daß die Haltearme zu gegenläufiger Bewegung gekoppelt sind. Damit wird erreicht, daß diese beiden Haltearme stets symmetrisch zu einer Mittellinie der Lagerplatte verstellt werden, so daß sich von selbst eine symmetrische Aufstellung des Gerätes in Bezug zur Lagerplatte ergibt.

Einzelne Haltearme sind erfindungsgemäß jeweils mit einem in Richtung ihrer Längsachse verlaufenden Führungsschlitz versehen, durch den ein an der Lagerplatte angeordneter, die Führungsschlitzränder mit einem Klemmkopf übergreifender Klemmbolzen hindurchgreift. Diese Anordnung ermöglicht eine Verschiebung der Haltearme in Richtung ihrer Längsachse sowie eine Verschwenkung um die Klemmbolzenachse. In weiterer Ausgestaltung der Erfindung kann der Klemmbolzen in einem die Lagerplatte durchsetzenden Langloch verschiebbar an der Lagerplatte angeordnet sein, so daß sich eine weitere Verschiebemöglichkeit der Haltearme in Richtung dieses Langloches ergibt. Die Haltearme sind mittels des Klemmbolzens gegen die Lagerplatte spannbar, indem der Klemmbolzen entweder in die Lagerplatte einschraubbar ist oder durch eine auf der den Haltearmen abgewandten Seite der Lagerplatte angeordnete Mutter spannbar ist.

Die Haltearme sind in weiterer Ausgestaltung der Erfindung jeweils an einem Ende mit einem Haltekopf versehen, welcher vorzugsweise mit Halteeinrichtungen für die Halterung des Gerätes ausgestattet ist. Diese Halteeinrichtungen können durch Haftflächen, durch zur Aufnahme eines Gerätefusses ausgebildete Ausnehmungen, durch Saugnäpfe, mit dem Gerät verschraubbare Schraubbolzen oder dergleichen gebildet sein.

In einer bevorzugten Ausgestaltung der Erfindung umfaßt die Lagerplatte eine Unterplatte und eine dazu mit Abstand angeordnete, mit der Unterplatte verbundene Oberplatte, wobei die Haltearme mit ihren den Halteköpfen abgewandten Enden zwischen der Unterplatte und der Oberplatte geführt sind. Damit kann beispielsweise im Falle von zahnstangenartig ausgebildeten, über ein Zahnritzel verbundenen Haltearmen das gesamte Koppelgetriebe geschützt unter der Oberplatte angeordnet sein.

In weiterer Ausgestaltung der Erfindung ist die Lagerplatte mit Mitteln zum Einhängen wenigstens eines Haltebügels für weitere Geräte versehen; dadurch ist die Möglichkeit gegeben, an der Halteplatte mehrere funktionell zusammenhängende Geräte anzuordnen.

Mehrere Ausführungsbeispiele der Erfindung sind in der Zeichnung dargestellt und im folgenden näher beschrieben. Es zeigen:

Fig. 1 einen Untersatz mit vier Haltearmen sowie ein auf den Untersatz aufzusetzendes Gerät;

Fig. 2 einen Untersatz gemäß Fig. 1 mit einem zusätzlichen Haltebügel;

Fig. 3 - 5 verschiedene Ausgestaltungen der Halteköpfe der Haltearme.

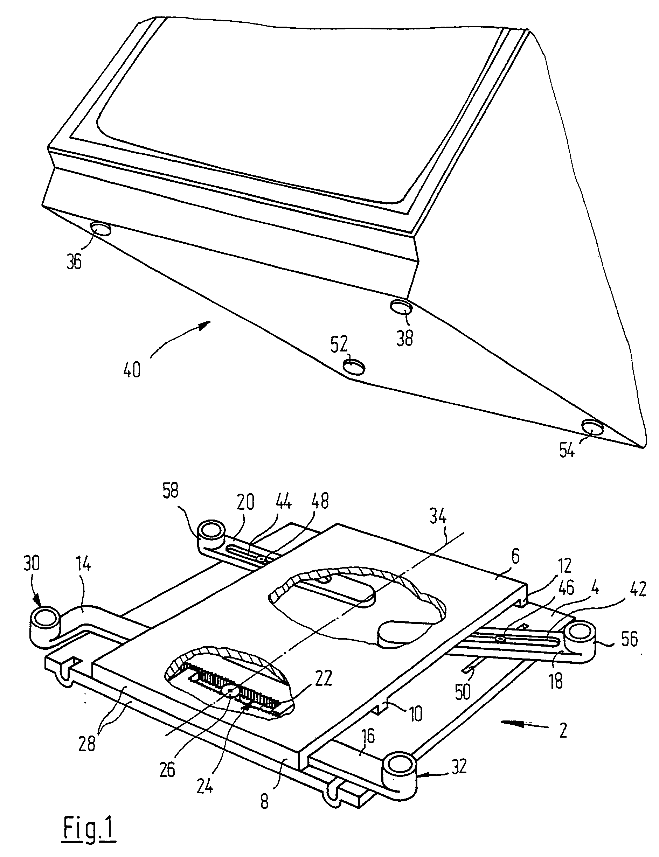

Der in Fig. 1 dargestellte Untersatz umfaßt eine Lagerplatte 2, die aus einer Unterplatte 4 und einer mit Abstand zu dieser angeordneten, an der Unterplatte 4 befestigten Oberplatte 6 besteht. An der Unterseite der Oberplatte 6 sind mehrere Stützstege 8,10,12 angeordnet, mit denen sich die Oberplatte 6 auf der Unterplatte 4 abstützt und deren Höhe den Abstand der Oberplatte 6 zur Unterplatte 4 bestimmen. Die Oberplatte ist beispielsweise durch Kleben oder über nicht dargestellte Schrauben mit der Unterplatte 4 verbunden.

Der Untersatz umfaßt ferner vier an der Lagerplatte 2 verstellbar gelagerte Haltearme 14,16,18,20.

Die Haltearme 14 und 16 sind zueinander parallel und in Längsrichtung verschiebbar angeordnet. Sie haben an ihren einander zugekehrten Seiten 22 bzw. 24 jeweils ein Zahnstangenprofil; diese Zahnstangenprofile sind mit einem zwischen den Haltearmen 14,16 angeordneten, an der Unterplatte 4 drehbar gelagerten Zahnritzel 26 in Eingriff. Durch das Zahnritzel werden die beiden Haltearme 14 und 16 zu gegenläufiger Bewegung miteinander gekoppelt. Die Dicke der Haltearme 14,16 ist gleich dem Abstand der Oberplatte 6 von der Unterplatte 4, so daß diese Platten eine obere bzw. untere Führungsfläche für die Haltearme 14,16 bilden. Die seitlichen Führungsflächen für die Haltearme 14 bzw. 16 werden durch die Stützstege 10 bzw. 8 gebildet, an denen die Haltearme 14,16 jeweils mit ihren den Zahnstangenprofilen 22,24 abgewandten Seiten anliegen.

Wie Fig. 1 erkennen läßt, sind die Haltearme 14,16 parallel zur Vorderkante 28 der Lagerplatte 2 angeordnet; der von der Vorderkante 28 weiter entfernte Haltearm 14 ist im Bereich seines freien Endes zur Vorderkante 28 hin abgekröpft, so daß der Haltekopf 30 des Haltearms 14 von der Vorderkante 28 den gleichen Abstand hat wie der Haltekopf 32 des Haltearms 16. Wie weiter aus Fig. 1 hervorgeht, haben die beiden Halteköpfe 30,32 immer den gleichen Abstand von der Längsmittellinie 34 der Lagerplatte 2. Der Abstand der Lagerköpfe 30,32 wird beispielsweise auf den Abstand der beiden vorderen Füsse 36,38 des auf den Untersatz aufzusetzenden Gerätes 40, hier eines Bildschirmgerätes, eingestellt. Dadurch, daß die Halteköpfe 30,32 jeweils gleichen Abstand zur Vorderkante 28 und zur Längsmittellinie 34 der Lagerplatte 2 haben, ist damit gewährleistet, daß die Vorderseite des Gerätes 40 parallel zur Vorderkante 28 und symmetrisch zur Längsmittellinie 34 ausgerichtet ist, so daß der Geräteschwerpunkt etwa im Bereich der Längsmittellinie 34 liegt.

Die Haltearme 18 bzw. 20 sind jeweils mit einem in Längsrichtung verlaufenden, den Haltearm jeweils durchsetzenden Führungsschlitz 42,44 versehen. Ein an seinem oberen Ende mit einem Klemmkopf 46 bzw. 48 versehener Klemmbolzen greift durch den Führungsschlitz 42 bzw. 44 hindurch und durchsetzt jeweils ein in der Unterplatte 4 ausgebildetes, jedem der Haltearme 18 bzw. 20 zugeordnetes Langloch 50 (das dem Haltearm 20 zugeordnete Langloch ist verdeckt und deswegen nicht sichtbar). Jeder Klemmbolzen hat an seinem dem Klemmkopf 46 bzw. 48 abgewandten Ende ein Gewinde, auf das eine Spannschraube aufgeschraubt werden kann. Wie Fig. 1 erkennen läßt, sind die Führungsschlitze 42,44 so ausgebildet, daß die oberen Führungsschlitzränder nach unten abgestuft sind, so daß der Klemmkopf 46 bzw. 48 jeweils auf den Stufen aufliegt und mit der Oberseite des Haltearms 18 bzw. 20 jeweils bündig ist.

Bei gelöstem Klemmbolzen können die Haltearme 18 bzw. 20 in Richtung der Langlöcher 50 verschoben, um die Achsen der Klemmbolzen verschwenkt und zusätzlich in Richtung der Führungsschlitze 42,44 verschoben werden, so daß sie in einem weiten Bereich beliebig an die Lage der hinteren Füsse 52,54 des Gerätes 40 angepaßt werden können.

Die Haltearme 18,20 sind ebenfalls mit Halteköpfen 56 bzw. 58 versehen.

Die Halteköpfe der Haltearme sind mit Halteeinrichtungen für die Halterung des Gerätes ausgestattet. In Fig. 1 sind die Halteköpfe 30,32,56,58 einerseits und die Füsse 36,38, 52,54 des Gerätes 40 andererseits mit zusammenwirkenden Haftflächen versehen, die das Gerät 40 auch bei geneigtem Untersatz sicher halten. Die Haftflächen können als Klettverschlußflächen oder auch als Klebeflächen ausgebildet sein. Die mit Klettverschlußflächen versehenen Füsse 36,38, 52,54 erlauben eine Aufstellung des Gerätes auf jeder anderen ebenen Fläche, so daß dazu die Füsse nicht ausgewechselt werden müssen.

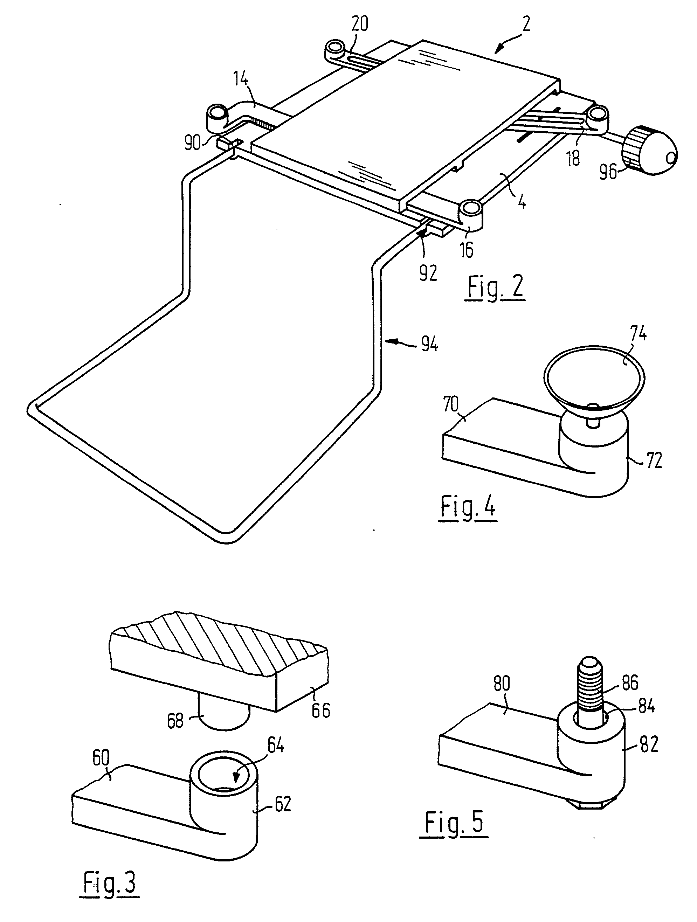

Fig. 3 zeigt einen Haltearm 60 mit einem Haltekopf 62, welcher eine nach oben offene Ausnehmung 64 zur Aufnahme eines an einem Gerät 66 ausgebildeten Fusses 68 hat. Diese Anordnung ermöglicht eine sehr sichere Positionierung des Gerätes auf den Haltearmen auch bei einer sehr starken Neigung des Untersatzes.

Fig. 4 zeigt einen Haltearm 70 mit einem Haltekopf 72, welcher einen nach oben offenen Saugnapf 74 trägt. Saugnäpfe sind für alle Geräte geeignet, die eine hinreichend glatte Unterseite haben. Eine Zuordnung der Saugnäpfe zu Gerätefüssen ist nicht erforderlich.

Fig. 5 zeigt einen Haltearm 80 mit einem Haltekopf 82. Der Haltekopf 82 ist von einer vertikalen Aufnahmebohrung 84 durchsetzt, welcher einen mit seinem Gewindeschaft nach oben weisenden Schraubbolzen 86 drehbar und axial fixiert aufnimmt. Der Schraubbolzen 86 paßt beispielsweise in an der Unterseite eines Gerätes ausgebildete Gewindebohrungen, die normalerweise zur Aufnahme von Gerätefüssen dienen. Um das Gerät auf den Haltearmen 80 zu fixieren, werden die Gerätefüsse herausgeschraubt und die Schraubbolzen 86 jeweils in eine Gewindebohrung des Gerätes eingeschraubt. Diese Befestigung ist besonders sicher und eignet sich deshalb beispielsweise auch für die Montage von Geräten in Straßenfahrzeugen oder dergleichen.

Fig. 2 zeigt einen Untersatz gemäß Fig. 1, wobei in an der Unterplatte ausgebildete Aufnahmen 90,92 ein Haltebügel 94 eingehängt ist, auf welchen ein weiteres, mit dem auf die Haltearme 14,16,18,20 aufzusetzenden Gerät zusammenwirkendes Gerät, beispielsweise eine mit einem Bildschirm zusammenwirkende Rechnertastatur, positioniert werden kann. Fig. 2 zeigt außerdem einen an der Lagerplatte 2 angeordneten Betätigungsgriff 96, welcher in an sich bekannter Weise zur Betätigung einer Klemmung für die Arretierung der Lagerplatte in einer beliebigen geneigten Lage und zur Verstellung der Lagerplatte 2 dienen kann.

**Ansprüche**

1. Untersatz für ein Gerät, **gekennzeichnet** durch eine Lagerplatte (2), an der mehrere Haltearme (14, 16, 18, 20) parallel zur Lagerplattenebene verstellbar gelagert sind.

2. Untersatz nach Anspruch 1, dadurch **gekennzeichnet**, daß die Haltearme (18, 20) parallel zur Lagerplattenebene verschiebbar und/oder jeweils um eine senkrecht zur Lagerplattenebene stehende Achse verschwenkbar sind.

3. Untersatz nach Anspruch 1 oder 2, dadurch **gekennzeichnet**, daß wenigstens zwei Haltearme (14, 16) parallel zueinander verschiebbar gelagert sind und daß diese Haltearme (14, 16) an einander zugekehrten Seiten (22, 24) jeweils ein Zahnstangenprofil haben, welches jeweils mit einem zwischen den Haltearmen (14, 16) an der Lagerplatte (2) angeordneten Zahnritzel (26) in Eingriff steht.

4. Untersatz nach einem der Ansprüche 1 bis 3, dadurch **gekennzeichnet**, daß einzelne Haltearme (18, 20) jeweils mit einem in Richtung ihrer Längsachse verlaufenden Führungsschlitz (42, 44) versehen sind, durch den ein an der Lagerplatte (2) angeordneter, die Führungsschlitzränder mit einem Klemmkopf (46, 48) übergreifender Klemmbolzen hindurchgreift, wobei die Haltearme (18, 20) jeweils mittels des Klemmbolzens gegen die Lagerplatte (2) spannbar sind.

5. Untersatz nach Anspruch 4, dadurch **gekennzeichnet**, daß der Klemmbolzen in einem die Lagerplatte (2) durchsetzenden Langloch (50) verschiebbar an der Lagerplatte (2) angeordnet ist.

6. Untersatz nach einem der Ansprüche 1 bis 5, dadurch **gekennzeichnet**, daß die Haltearme (14, 16, 18, 20, 60, 70, 80) jeweils an einem Ende mit einem Haltekopf (30, 32, 56, 58, 62, 72, 82) versehen sind, wobei insbesondere vorgesehen ist, daß die Halteköpfe (30, 32, 56, 58, 62, 72, 82) jeweils mit Halteeinrichtungen für die Halterung des Gerätes ausgestattet sind.

7. Untersatz nach Anspruch 6, dadurch **gekennzeichnet**, daß die Halteköpfe (30, 32, 56, 58) an ihrer dem Gerät (40) zugewandten Oberseite mit Haftflächen versehen sind.

8. Untersatz nach Anspruch 6, dadurch **gekennzeichnet**, daß die Halteköpfe (62) jeweils eine Ausnehmung (64) zur Aufnahme eines Gerätefußes (68) haben.

9. Untersatz nach Anspruch 6, dadurch **gekennzeichnet**, daß die Halteköpfe (72) jeweils einen dem Gerät zugewandten Saugnapf (74) tragen.

10. Untersatz nach Anspruch 6, dadurch **gekennzeichnet**, daß die Halteköpfe (82) jeweils einen mit seinem Gewindeschaft dem Gerät zugewandten Schraubbolzen (86) tragen.

11. Untersatz nach einem der Ansprüche 1 bis 10, dadurch **gekennzeichnet**, daß die Lagerplatte (2) eine Unterplatte (4) und eine dazu mit Abstand angeordnete Oberplatte (6) umfaßt und daß die Haltearme (14, 16, 18, 20) mit ihren verstellbar gelagerten Enden zwischen der Unterplatte (4) und der Oberplatte (6) geführt sind.

36
40
52
38
54

58
30    14    20    44    48    34    6    12    46    4    42    56
22    18    50
28    10    2
26    24    8    16    32

<u>Fig.1</u>

Fig. 2

Fig. 4

Fig. 3

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 319 838 (RASTOLDO) <br> * Seite 1, Zeilen 1-27; Figuren * | 1,2,4,6 -8,11 | A 47 B 81/06 <br> A 47 B 37/02 |
| Y | | 3,5 | |
| | --- | | |
| Y | US-A-1 862 113 (DRECKSCHMIDT) <br> * Seite 1, Spalte 2, Zeilen 91-99; Figuren 8,3,4 * | 3 | |
| | --- | | |
| Y | FR-A-2 388 528 (SOCIETE EUREX S.A.) <br> * Seiten 4-6; Figur 1 * | 5 | |
| A | | 1,2 | |
| | --- | | |
| A | FR-A-2 374 868 (RASTOLDO) <br> * Seite 2, Zeilen 7-36; Figuren 1,2 * | 1,2 | |
| | --- | | |
| A | FR-A-2 452 898 (SOCIETE DE MEUBLES MODULAIRES ET TRANSFORMABLES) <br> * Seite 2, Zeile 34 - Seite 5; Figur 1 * | 1,2 | |
| | ----- | | |

**RECHERCHIERTE SACHGEBIETE (Int. Cl.4)**

A 47 B

Der vorliegende Recherchenbericht wurde für alle Patentansprüche erstellt

| Recherchenort | Abschlußdatum der Recherche | Prüfer |
|---|---|---|
| DEN HAAG | 16-06-1989 | DE GROOT R.K. |